# EUROPEAN PATENT SPECIFICATION

(11) **EP 1 703 805 B1**
(45) Date of publication and mention of the grant of the patent: **11.03.2009**
(21) Application number: 04804855.7
(22) Date of filing: 15.12.2004
(51) Int. Cl.: A23K 1/00, A23K 1/18

(54) **FEED FOR AQUATIC ORGANISMS, CONTAINING ALGAE AND OR YEAST**
FUTTER FÜR WASSERLEBEWESEN, DAS ALGEN UND/ODER HEFE ENTHÄLT
COMPOSITION ALIMENTAIRE POUR ORGANISMES AQUATIQUES CONTENANT DES ALGUES ET/OU DES LEVURES

(30) Priority: 16.12.2003 EP 03447292
(43) Date of publication of application: 27.09.2006
(73) Proprietor: Inve Technologies N.V., 9200 Dendermonde (BE)
(72) Inventor: DHERT, Philippe, B-9550 Herzele (BE)
(74) Representative: Van Reet, Joseph
(86) International application number: PCT/EP2004/053504
(87) International publication number: WO 2005/058063

(56) References cited:
- WO-A-02/00035
- WO-A-98/47392
- CA-A- 2 334 122
- US-A- 4 148 689
- US-A- 4 744 996
- US-A- 5 128 153
- DATABASE WPI Section Ch, Week 198420 Derwent Publications Ltd., London, GB; Class C03, AN 1984-124985 XP002287404 & JP 59 063146 A (MATSUNAGA T) 10 April 1984 (1984-04-10)

## Description

The present invention relates to a feed for the culture of aquatic organisms, in particular filter feeding organisms, containing an amount of at least 20% by weight, preferably at least 25% by weight, dry matter of at least partially dried cells and/or cell fragments of unicellular algae and/or yeast.

Aquatic filter feeding organisms, in particular zooplanctonic organisms that are used in marine aquaculture as live prey organisms like rotifers (*Brachionus* species) and the larvae of the brine shrimp *Artemia,* require suspended feed particles or globules with a particle size diameter of between 0.1 and 50 µm.

Rotifers and *Artemia* are widely used live feed organisms for marine fish larvae. Both organisms are obligate filter feeders. Some hatcheries rely on the production of live algae for the culture of filter feeding organisms. Since this production is costly and often unpredictable in quality and quantity, most hatcheries have attempted to develop suitable artificial diets. Over the last 20 years many culture and enrichment products were developed including dried unicellular algae, algal pastes, yeast and/or emulsified preparations, compound diets, micro-particulate diets or self-emulsifying concentrates. There are many problems associated with the development of artificial diets. To be acceptable, these diets must comply with the right dimensions, be nontoxic and easily assimilated and digested. Moreover, the feeds must remain in suspension, and preferably be provided on a continuous basis.

Most research on micro-algal diets was done with bivalve molluscs because the production of live algae in hatcheries is costly and often unpredictable and the culture of bivalves on artificial diets has so far not been very successful. Different forms of algal diets tried out in the culture of bivalve molluscs are refrigerated algal pastes, freeze-dried or spray-dried micro algae or heterothropically grown spray-dried algae (Knauer, J. and Southgate, P. 1999. A review of the nutritional requirements of bivalves and the development of alternative and artificial diets for bivalve aquaculture. Reviews in Fisheries Science, 7(3&4): 241-280).

Filter feeders like rotifers and *Artemia* on the other hand have successfully been cultured or enriched on artificial (non-algal) feeds, like: yeast-based diets, emulsified preparations, micro-particulate diets etc. Yeast diets are so far the most successful diets, especially for culturing rotifers because of its ease to adapt the digestibility, its availability and its relative low cost. WO 02/00035 describes the production of yeast diets for aquatic animals, which comprises the use of gel encapsulated emulsions. Besides yeast based diets, artificial diets based on algae are still an option because of certain nutritional and health components found in micro-algae. However, diets based on yeast or algae have some important drawbacks that so-far have not been solved. Drawbacks of the following artificial diets, currently used, are explained:

Algal pastes are micro-algae centrifuged into a paste form and subsequently refrigerated if required. Shelf life of those products is often not more than 1 or 2 weeks, and algae concentration on wet weight basis is rather low, usually less than 20% by weight algae dry matter, which makes the product not practical for commercial use. Spray-dried algae (both autotrophic and heterotrophic cultures) need to be rehydrated in water before use whereby the algae tend to clump together in aggregates. Moreover they need to be fed in different small portions to maintain the concentration of dried algae in suspension as these diets settle out Freeze-dried algae offer the best quality of product in terms of integrity of the algal cells, but the process is very costly and not practical on industrial scale. Moreover freeze-dried algal cells need to be fed in different small portions to maintain the concentration of the dried algal cells in the water column.

Other algal feeds for marine organisms developed during the last 15 years are among others: feed containing Chlorella blended with microencapsulated oily nutriments-capsules for rotifers and *Artemia* (JP01262758), freeze-dried Chlorella with added phospholipids (JP63164824) for rotifers, a stabilized Chlorella suspension for rotifers (JP10295285) or live Chlorella frozen in blocks of ice (JP20022085023). Still those algal products have one or more of the drawbacks mentioned above: expensive production method which is not feasible on large scale; clumping together, high settlement of algal powder or not practical for use.

In general terms, the same problem counts for yeast diets. Yeast cells or yeast components, though they are of lower nutritional value for the above mentioned organisms, are frequently used because of low production costs. When yeast is introduced in the culture medium, they clump together, causing high settlement, inducing pollution in the culture tanks.

An object to the present invention is therefore to provide a new feed containing the above defined minimum amount of cells and/or cell fragments of unicellular algae and/or yeast, which feed enables to reduce the amount of moisture in the cells and/or cell fragments, i.e. to improved the shelf life, whilst avoiding or at least reducing the clump formation problems associated with spray-dried algae and yeast.

To this end, the feed according to the present invention is characterised in that said feed is in the form of at least one gelled body, which has a weight of at least 1 g and which comprises, in addition to said cells and/or cell fragments of unicellular algae and/or yeast, between 30% and 80% by weight of a water soluble or dispersible gel wherein said cells and/or cell fragments are embedded. The feed may be free of particles which are larger than 500 µm and which are substantially insoluble in water of 20°C or may optionally comprise such particles. In case it comprises such larger particles, the percents by weight of cells and/or cell fragments and of the gel are to be determined without including the weight of said optional solid particles in the weight of the feed and the weight of the gelled body is to be determined not including the weight of such larger particles.

It has been found quite surprisingly that, as a result of the fact that the cells and/or cell fragments are embedded in a gel matrix, they are still released easily in the culture medium, and this not in the form of clumps but mainly in the form of individual cells and/or cell fragments, when lowering the moisture content of the cells and/or cell fragments (for example by a spray-drying process) to increase the shelf life of the feed. Indeed, it has also been found that, notwithstanding the high water content of the gel matrix, the shelf life of the feed is increased by using dryer cell and/or cell fragments. An additional advantage of the feed according to the invention is that the individual cells or fragments are gradually released in the culture medium so that they are readily available for a longer period of time for filter feeding organisms. Since the cells and/or cell fragments have a size of between 0.1 and 50 µm filter feeding organisms easily can take them up.

An important advantage of the invention is that, by the use of dried cells and/or cell fragments, a relatively high content of algae or yeast cells and/or cell fragments can be included in the feed (easily the double amount compared to algae pastes), which can moreover be conserved for longer periods at room temperature. Algal based feeds often have high water content and can only be conserved for a few days or weeks in cold conditions, or need to be frozen. The present invention enables to provide a diet which can be conserved for several months at room temperature.

Another important advantage of the invention is that the gelled body of the feed can be more easily weighed, handled and unpacked without spilling compared to conventional feeds. This improves the accuracy of the determined feed quantity and reduces considerably labour.

In a preferred embodiment of the feed according to the invention, the gelled body comprises at least one anti-microbial agent. An advantage of this embodiment is that the feed enables to assure non-lethal concentrations of the anti-microbial agent for the cultured organisms but at the same time sufficient concentrations to reduce the bacterial load.

In a further preferred embodiment of the feed according to the invention, the gelled body comprises at least one probiotic micro-organism that can replace at least partially the existing bacterial population present in the prey organism, the predator or in the surrounding medium mostly to prevent diseases.

In another preferred embodiment of the feed according to the invention it comprises less than 10% by weight, preferably less than 5% by weight, of solid food particles which are larger than 500 µm, and preferably less than 10% by weight, more preferably less than 5% by weight, of solid food particles which are larger than 100 µm. Filterfeeders such as Artemia and rotifers are usually sieved out of the medium by means of a fine sieve, having for example a mesh size of about 100 or more particularly about 120 µm. Consequently, most of the small solid food particles which remain in the medium will be removed through the sieve when sieving the filterfeeders out of the culture medium. It should be noted that the feed according to the invention may comprise larger solid particles, i.e. particles which will usually be (much) larger than 500 µm to adjust the floating characteristics of the gelled bodies. Such non-food particles can however be easily separated from the filterfeeders, either by picking them by hand out of the medium or by filtering them of by means of a coarse sieve.

In still another preferred embodiment of the enrichment product according to the invention, the gel comprises water and at least one gelling agent, the gelling agent and the amount thereof being selected so that it takes between 1 and 6 hours for the feed to release 50% by weight of its cells and/or cell fragments when introducing a spherical piece of the feed, which measures 5 grams without any of said optional larger solid particles, in 500 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of feed, and has a length of 40 mm and a diameter of 8 mm.

It has been found that with such a feed a sufficiently sustained release of the product, in particular of the cell and/or cell fragments, can be achieved by selecting an appropriate size of the gelled body or bodies which are introduced in the medium.

Preferably, the gelled body has a weight of at least 10 g, preferably at least 50 g, more preferably at least 100 g and most preferably at least 200 g, the weight of the optional solid particles larger than 500 µm not included. In general, the larger the gelled body, the longer the feed particles and the optional disinfecting agent and/or the probiotic micro-organisms are released.

The present invention also relates to a process to produce the feed and to a method for culturing aquatic organisms wherein the feed is used.

Other particularities and advantages of the invention will become apparent from the following more detailed description of the particular embodiments of the feed, its process and the feeding method according to the present invention. In the examples reference is made to the drawings wherein:

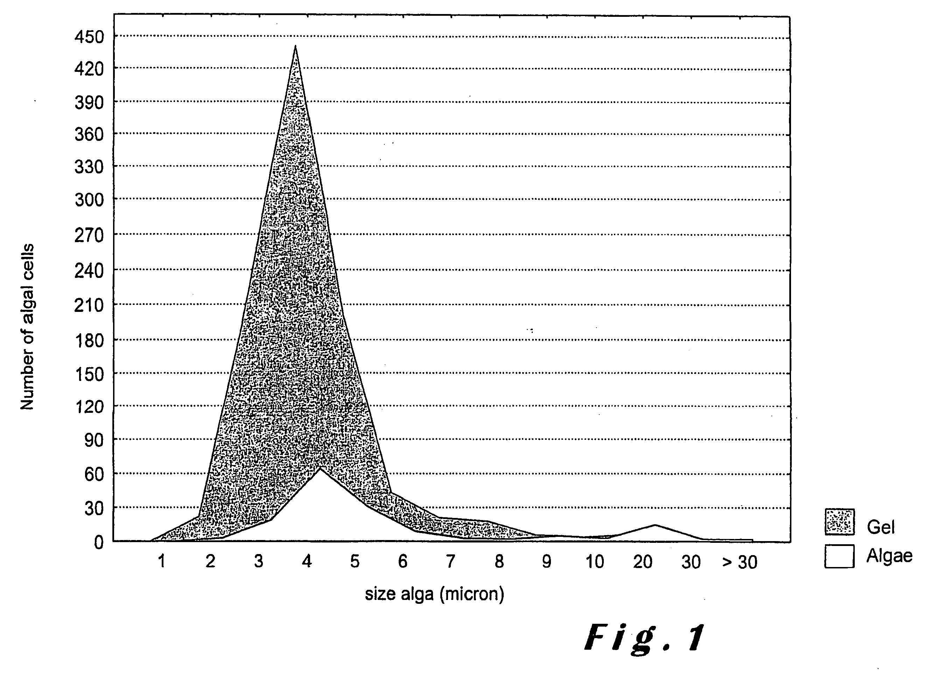

Figure 1 is a graph illustrating the particle size distribution obtained when mixing, by means of a kitchen blender, a gelled body according to the invention, containing dried algae cells, in water and when mixing the same amount of dried algae cells, as such, in water.

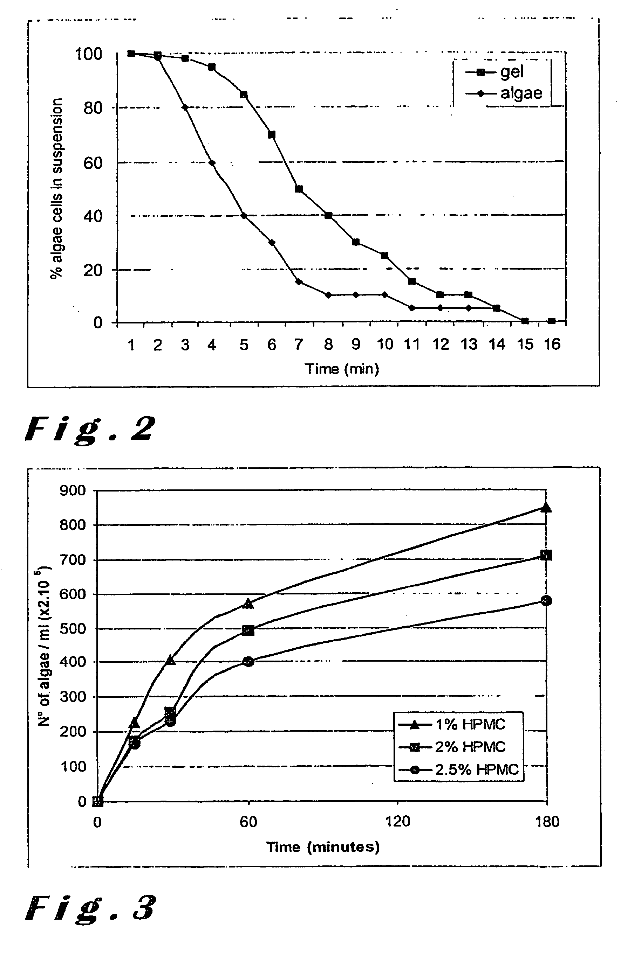

Figure 2 is a graph illustrating the settlement rate of the particles suspended in 1 L Imhoff cones without aeration starting from a gelled body containing the dried algae cell or starting from the dried algae cells as such. The cones were filled with salt water having a salinity of 25 ppt and a temperature of 30°C. Both feeds were dispersed first, by means of a kitchen blender, in the salt water before being added to the cones;
Figure 3 is a graph illustrating the different speed of release of particles from a gelled body according to the invention containing 1%, 2% and respectively 2.5% gelling agent. The experimental data were obtained by putting a piece of 4g of each gelled feed in 400 ml of Instant Ocean (25 ppt) and shaken on a shaking machine at 175 rpm. The ambient temperature was 21 °C. The number of algae released per ml was then counted; and

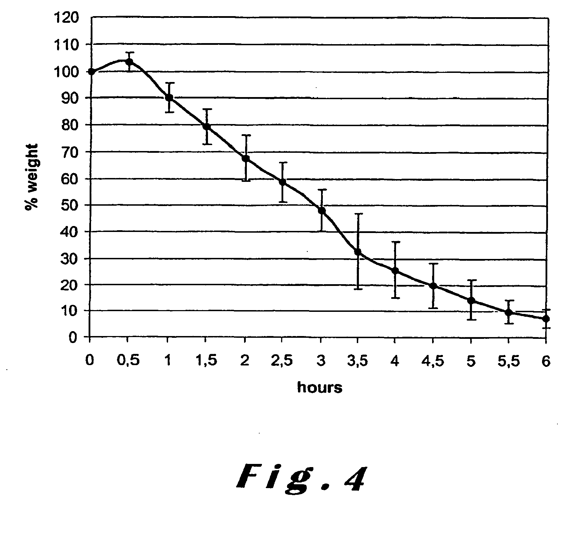

Figure 4 is a graph illustrating the release properties of particles from a gelled body (mean of 3 replicates) according to the invention under specific conditions. These conditions included introducing a spherical piece of the gelled feed measuring 5g in 500 ml of distilled water of 20°C which is contained in a flat-bottom cylindrical beaker with an inner diameter of 85 mm and which is continuously stirred at approximately 120 rpm with a cylindrical magnetic rod which rotates on the bottom of the beaker, underneath the piece of feed and which had a length of 40 mm and a diameter of 8mm. Since the product was in direct contact with the rotating rod and this contact caused substantial release of the product, the product was introduced in a thin-walled flat bottom plastic cup with wholes in the cylindrical side wall, placed in the beaker above the rotating rod, so that direct contact between the product and the rod was prevented and so that the cup still allowed the rotation of the water. Every half hour, each product was gently taken out of the beaker by means of a sieve with a 118 µm mesh size or if possible with a spoon in such a way that no significant release was caused by taking the piece out of water. After weighing the piece on a balance, it was returned to the beaker. The test lasted for 6 hours.

The feed according to the invention is in the form of at least one gelled body. This gelled body may show different consistencies varying from a kneadable material to a rather rigid body. The feed may comprise solid particles which have a size larger than 500 µm and which are substantially insoluble in water of 20°C or may be free of such solid particles. Not including any such optional larger solid particles, the gelled body has a weight of at least 1 g and contains at least partially dried cells and/or cell fragments of unicellular algae and/or yeast. The gelled body comprises between 30% and 80% by weight, preferably between 40% and 60% by weight, of a water soluble gel, the weight of any optional insoluble particles larger than 500 µm being not included in the weight of the gelled body. This gel is formed by at least a gelling agent and water. When the gel contains dissolved water soluble products such as water soluble disinfecting agents, these products are to be comprised in the weight of the gel. When introduced in water, in particular in an aqueous culture medium, the gel dissolves or disperses rather slowly so that the dried algae and/or yeast cells or fragments are slowly released. Importantly, the released cells or fragments substantially do not clump together, even when they are dried by a spray-drying process, and remain for a longer period in the water column compared to not gelled diets. Once the gelled body is introduced in the culture medium the individual cells or fragments of appropriate small sizes (0.1-50 µm) stay mainly suspended in the water until consumed by filter feeding organisms. This slow release feature avoids settling of the diet on the bottom or on the sides of the tanks. A further advantage of the gelled body is that it can be packed or wrapped as such and can be introduced in the culture tank without the need for dissolving or dispersing it first in water. The gelled bodies preferably do not stick to the hands or to the packing material but can easily be unwrapped, weighed and portioned.

The gelled body contains at least 20% by weight, preferably at least 25% by weight of the cells and/or cell fragments of the unicellular algae and/or the yeast, the weight of said optional solid particles being not included in the weight of the gelled body when determining these percentages. The algae or yeast has to be at least partially dried in order to enable those dry matter contents in the gelled body. The algae or yeast cells can be obtained by a drying process. During the drying process some cells may be ruptured so that also cell fragments are present. Optionally, the dried cells may be fractioned in order to increase the amount of cell fragments. However, since the size of the algae and/or yeast cells is within the range of 0.1 to 50 µm a fractioning step is preferably not carried out. When the gelled body consists only of gel and cells and/or cell fragments, these cells and/or cell fragments may have a maximum moisture content of about 71% by weight for the minimum gel content of 30% by weight. Preferably, the moisture content of the cells and/or cell fragments is lower than 20% by weight, more preferably lower than 15% by weight and most preferably lower than 10% by weight. In this way not only the yeast and/or algae dry matter content of the gelled body can be increased but also the shelf life of the feed. Dried yeast or algae with such dry matter contents are commercially available. They can be produced for example by a freeze-drying process resulting normally in the best quality. In practice, a spray-drying process is however to be preferred since it is less expensive and is feasible for big scale production. Optionally, when the cells or cell fragments may still contain a relatively large amount of moisture, a centrifugation technique could possibly be used additionally.

When drying the cells and/or cell fragments to a moisture content of about 4 to 5% (for example by spray-drying), a dry matter content of at the most about 66 to 67% by weight can be obtained with a minimum gel content of about 30% by weight. Compared to diets consisting in spray-dried algae, lower inclusions are thus reached but the advantage is that in the gelled diet with spray-dried algae, the algae cells or fragments are released separately in the water column with considerably less clump formation.

The gelled body may have any arbitrary shape but is preferably spherical or cylindrical for practical use. Sometimes the gelled body will have a too high specific weight for the culture medium and get stuck on the bottom of the tank. Therefore the gelled body may include non-edible objects or gas producing materials (like polystyrene foam or bicarbonates producing gasses when coming into contact with water) to make the whole gelled body floating or suspending in the culture medium. For the same purpose, the gelled body may be hung in a floating or suspended net close to the water inlet or an oxygen distributor, which additionally improves the releasing features of the gelled body. The materials used to adjust the floating characteristics of the feed, or which serve as a carrier or support for the feed, will usually be in the form of particles which are larger than 500 µm and which do not dissolve in water of 20°C. Such particles also embrace larger pieces. The larger the particles of the carrier or support material, the more easily they can be removed afterwards from the enrichment medium.

The total weight of the gelled body, not including to weight of any optional particles larger than 500 µm, is preferably at least 10 g to make it more convenient for practical use and to increase the time of release. Since the culture tanks of marine organisms in commercial hatcheries often are of the size of 100 l or more, the total weight of the gelled body (not including said optional larger particles), before being introduced in the culture medium, is preferably higher than 50 g, more preferably higher than 100 g and most preferably higher than 200 g.

The gelled body of the feed according to the invention comprises preferably cells and/or cell fragments of unicellular algae, more particularly in an amount of at least 20%, preferably at least 25%, and more preferably at least 35% by weight dry matter algae on the weight of the feed, not including the weight of said optional particles larger than 500 µm. The starting product for producing this feed is at least partially dried algae which are economically more feasible and practical for commercial use compared to live cells. Dried algae have been proven to be a good alternative for live algae cells to fulfil the nutritional requirements of the marine organisms. The serious drawback on the use of dried algae cells is the clogging of algae cells in the water, the fast deposit on the bottom or the sides of the culture tanks. The use of dried algae in the feed of the present invention offers a solution for these mentioned drawbacks.

The gelled body of the feed according to the invention may also comprise cells and/or cell fragments of yeast, more particularly in an amount of at least 20%, preferably at least 25%, and more preferably at least 35% by weight yeast dry matter on the weight of the feed, not including the weight of said optional particles larger than 500 µm. Yeast cells are nutritionally not as good as algae cells for the prey organisms, but they are frequently used because they are more available and less costly to produce. Yeast cells also have the drawback to clump together when introduced in the culture medium. Yeast cells embedded in gel offers a solution to overcome clumping or settlement.

In a preferred embodiment, the feed has a relatively high content of the cell or cell fragments of the unicellular algae and/or yeast. More particularly it contains at least 35% by weight dry matter of cells and/or cell fragments of algae and/or yeast. On a dry weight basis, it contains more than 40%, preferably more than 50% and most preferably more than 60% by weight cells and/or cell fragments of algae and / or yeast. All of these percentages are to be determined not including the weight or dry weight of any water insoluble particles larger than 500 µm.

For producing the feed according to the invention, use can be made of different gelling agents, or mixtures of gelling agents, and of different amounts of such gelling agents. Preferably, the gelling agent and the amount thereof is selected in such a manner that it takes between 1 and 6 hours for the feed to release 50% by weight of its cells and/or cell fragments when introducing a spherical piece of the feed, which measures 5 grams without any of said optional larger solid particles, in 500 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of feed, and has a length of 40 mm and a diameter of 8 mm. One hour after introducing such a piece of feed in the beaker of water, preferably at least 5% by weight of the feed is released. Most preferably, the above described release properties are also achieved when the water wherein the feed is introduced has a temperature of 30°C. In this way, the feed can be used under different temperature conditions.

The gelling agent preferably comprises a gum, belonging to a large family of water soluble celluloses (C₆H₁₀O₅)ₙ like: methylcellulose, ethylcellulose, hydroxypropylcellulose, hydroxypropylmethylcellulose (HPMC), methylethylcellulose, carboxymethylcellulose (CMC) etc. The gelling agent comprises preferably between 1 and 10% by weight of the total weight of the gel. Such a gel has a good constitution which allows above mentioned characteristics with respect to preventing clumping. Inclusion of more than 1% and less than 10% CMC of the gel gives a good constitution to the gelled feed but with HPMC the gel becomes more elastic and rolls in the hands without sticking to the hands or to the recipients. Different hydrocolloids and/or binders can improve the elasticity and the consistency and/or the release features of the feed according to the invention.

In the feed according to the invention, particulate additives, containing particles having a size smaller than 100 µm, preferably smaller than 50 µm, so that they can be ingested by the filter feeding organisms, can be easily incorporated in the gelled body or bodies. The incorporation of particulate additives in diets often causes problems regarding the deposit of these additives in the diet itself, mainly when the diets are liquid, which is often the case for live food organisms. When diets with deposited additives are administered to the prey organisms, unbalanced portions are introduced in the water. Incorporation of the particulate additives in a gelled diet according to the invention prevents deposit of the particles in the diet, because the additives are captured in the structure of the gel. Examples of commonly used particulate additives that normally deposit easily in diets are: pigments (astaxanthine, canthaxanthine...), vitamins (Vitamine B12...) and attractants.

Rotifers and *Artemia* are usually enriched with highly unsaturated fatty acids before they are fed as live prey organisms to larval fish or shrimp. Some algae and all yeasts do not fulfil the lipid requirements of the fish and shrimp. In the gelled body of the present invention, globules of lipids, preferably those with a high content of highly unsaturated fatty acids like EPA and DHA, can be easily incorporated in the gelled body. In a preferred embodiment, the gelled body, not including the particles larger than 500 µm which may optionally be present, contains more than 5%, preferably more than 7% by weight lipid globules next to algae and/or yeast cells and/or cell fragments on dry weight basis (i.e. more than 5 g lipids per 100 g feed dry matter (DW), the feed dry matter including all the components except water and can be determined by drying a known quantity (WW) of the feed in the oven at a temperature of 60°C till a constant weight is reached (DW). The feed dry matter percentage is calculated by DW*100/WW.

The food particles in the feed should preferably be smaller than 100 µm, more preferably smaller than 50 µm. When sieving the rotifers or the Artemia nauplii out of the culture medium, any of such small food particles which have not been ingested by the filterfeeders will pass through the sieve. The sieves used to filter rotifers or Artemia nauplii out of the medium are indeed fine sieves having a mesh size of for example about 118 µm. When the feed comprises solid food particles which do not dissolve in water of 20°C and which are larger than 500 µm, or larger than 100 µm, they are preferably only present in an amount of at the most 10% by weight, preferably in an amount of at the most 5% by weight in the feed. In this way, the feed is not contaminated with a large amount of food which cannot be taken up by the filterfeeders and which would thus be lost anyway. The expression "solid food particles" is used to indicate food particles which can be ingested and digested by aquatic organisms, in particular by larger adult aquatic organisms such as fish or shrimp. As explained hereinafter, the feed may however contain larger, non-food solid particles to adjust in particular the floating characteristics of the gelled body in the culture medium.

In the process according to the invention, algae and/or yeast cells and/or cell fragments are intermixed with a gelling agent and water till the water is bound and the slurry becomes a compact gelled body with a desired constitution and elasticity. The cells and/or cell fragments used to prepare the feed have preferably a moisture content of less than 20% by weight, more preferably of less than 15% by weight and most preferably of less than 10% by weight.

Most important filter feeding organisms which can be fed with the feed according to the present invention are rotifers and/or *Artemia,* since those species are worldwide used live prey organisms for shrimp and fish larvae and since the cell and/or cell fragments of unicellular algae and/or yeast are of the required size, even without fractioning. The method to culture filter feeding organisms, includes feeding the organisms or maintaining the organisms in culture medium in which the gelled body of the present invention is introduced. It should be noted that the term "culturing" does not only embrace the growing and multiplication of organisms but also the feeding thereof, usually for a relatively short period of time, to enrich the organism with desirable substances before being fed to the predators like fish or crustacean larvae.

Usually it is important that certain agents in the culture of marine organisms are administered in low quantities at several times to avoid overdoses or settlement and pollution of the additives in the culture tank. When incorporated in the gelled feed, together with algae and/or yeast, those agents will be slowly released at the same speed as the micro-algae and/or yeast. In this way, the distribution of the agents can be better controlled.

In the feed according to the invention, (water soluble) anti-microbial agents can be incorporated in the gelled body or bodies to control the hygienic properties of the culture medium or to stimulate certain microbial communities. It is important to introduce said disinfecting agents and/or micro-organisms in certain quantities with determined ranges in the culture medium. A concentration that is too low will have no effect on the microbial community of the culture medium. On the other hand, too high concentrations will adversely affect the culture organisms (rotifers, *Artemia* etc). Initial concentrations of the anti-microbial agent, incorporated in live feed diets is normally too high because of the gradual break down of the anti-microbial agent during the culture of the rotifers or *Artemia.* The initial concentration of the incorporated anti-microbial agent in the feed according to the invention will be lower because it will only be partly released when introduced in water. The gelled body will continue to release the further agents in small amounts, distributed over a certain period. This way, the distribution of the anti-microbial agent is better controlled in the culture medium and since lower, but more constant concentrations will be available in the culture tank, more different types of anti-microbial agents can be administered for those particular applications.

In a further preferred embodiment of the feed according to the invention, the gelled body comprises probiotic organisms. Meant under probiotic organisms are certain micro-organisms (live or dead bacteria, yeast...) that can be actively added to the feed product in order to achieve beneficial effects for the prey organisms or the predator (e.g.: enhanced digestibility, improved immune system) or that can replace at least partially the existing bacterial population present in the prey organism, the predator or in the surrounding medium mostly to prevent diseases. Examples of probiotic micro-organisms are (but not limited to): *Lactobacillus* strains, *Enterococcus* strains, *Bacillus* strains, *Pediococcus* strains, *Saccharomyces* strains etc. Not including the weight of any optional particles larger than 500 µm in the weight of the feed, the minimum amounts of probiotic micro-organisms in the feed to have any beneficial effect are 10⁷ cells per gram feed (in case of dead bacteria or spores) or 10⁷ colony forming units per gram feed in case of live bacteria and 10⁷ cells per gram feed in case of yeast. When probiotic yeast is used which is at least partially dried, the amount of this probiotic yeast is included in the total amount of partially dried yeast.

The advantage of adding probiotic organisms in the feed according to the invention compared to adding probiotic organisms as such is that the functioning of the micro-organisms can be prolonged in time, mainly because the probiotic micro-organisms will be released at more or less the same speed as when the feed particles are released.

In the following examples all percentages are expressed as weight percentages and are calculated on the final wet weight.

### Example 1

Powder phase: Mix 44% spray-dried *Chlorella* algae powder (having a moisture content of about 5% by weight) with 5% anti-microbial agents and 2% HPMC.

Liquid phase: Add 6% oil emulsion ("DHA-Selco^{™}" (a trademark of INVE), containing about 69% oil and 31% water) to 43% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 52% gel (including the water in the oil emulsion and the water soluble anti-microbial agents) and about 42% algae dry matter (about 79% on a dry matter basis). It further comprises about 8% of oil on a dry matter basis.

After 3 months in room temperature: the gel is still conserved well, no growth of fungi, bacteria or bad smells is observed.

Figure 1 shows the large difference in the particle size distribution between algal feed, consisting of the dried algae as such, suspended in water by means of a kitchen blender and the same algal feed, but gelled according to example 1, suspended in water by means of the same kitchen blender. Surprisingly more than 90% of the particles released of the gelled feed are between 1 and 7 µm (size of the single algal cells) while in the non-gelled feed only a small amount of the particles (less than 20% compared to the gelled feed) are available in this range. The other particles clump together, so fewer particles are available and they have a bigger particle size.

Figure 2 shows a graph illustrating the sinking speed of the algal particles illustrated in Figure 1 in 1 l Imhoff cones without aeration. It can clearly be seen that the particles in the algae diet (dried algae as such) that were not gelled before it was mixed, sediment faster to the bottom of the cone than the particles in the gelled diet. Consequently, compared to a dried algae feed as such, the feed according to the invention offers not only the advantage that the particles released in the culture medium have on average a smaller size so that they can be ingested more easily by the filter feeding organisms but also that the released particles settle considerably slower to the bottom so that, once released from the gelled body, they are longer available as feed for the filter feeding organisms. In this way, the feed can be used more efficiently causing less pollution of the culture medium. Additionally, the particles are released more slowly in the medium from the gelled body than when the particles are not contained in a gel matrix.

Figure 3 shows that the release rate of the individual algal cells, in real culture conditions (temp, volume, salinity), from a feed obtained in accordance with Example 1 can moreover be easily adjusted by varying for example the amount of gelling agent. For this experiment, three different percentages of HPMC (1%, 2% and 2.5%) were used, the other components were used in the same amounts as indicated in Example 1. The diet with only 1% HPMC, re leased the algae fast. The higher the amount of HPMC was, the slower the algae were released.

Figure 4 shows that under the mentioned conditions, the products first absorbed water for half an hour but in the meantime they released particles due to the fact that the gel dissolved slowly in the water. Under these conditions, the products had lost more than 5% but less than 50% of their weight after 1 hour. After 3 hours about 50% by weight of the products was released. When the water with the released particles was poured through the sieve, apart from the piece of the product itself, no food particles remained on the mesh. All particles released in the water had a size less than 100 µm, which meant that they were edible for *Artemia* or rotifers.

### Example 2

Powder phase: Mix 46% spray-dried *Chlorella* algae powder (having a moisture content of about 5%) with 4% anti-microbial agents, 1 % HPMC and 4% vitamins.
Liquid phase: 45% water

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 50% gel (including the water soluble anti-microbial agents) and about 43% algae dry matter (about 80% on a dry matter basis). It further comprises about 8% of oil on a dry matter basis.

When introduced in the culture medium, the algal cells will slowly release from the gel and not clump together in aggregates. After 3 months in room temperature: the gel is still conserved well, no growth of fungi, bacteria or bad smells is observed.

### Example 3

Powder phase: Mix 20% *Isochrysis galbana* algae powder (having a moisture content of about 5%) with 4% anti-microbial agents, 2% HPMC, 8% proteins, 7% spray-dried yeast (having a moisture content of about 5%) and 8% vitamins.

Liquid phase: Add 6% oil emulsion ("DHA-Selco™") to 45% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 53% gel (including the water in the oil emulsion and the water soluble anti-microbial agents) and about 25% algae/yeast dry matter (about 48% on a dry matter basis). It further comprises about 8% of oil on a dry matter basis.

When introduced in the culture medium, the algal cells will slowly release from the gel and not clump together in aggregates. After 3 months in room temperature: the gel is still conserved well, no growth of fungi, bacteria or bad smells is observed.

### Example 4

Powder phase: Mix 24% spray-dried *Chlorella* algae powder (having a moisture content of about 5%) with 17% spray-dried *Ascophyllum nodosum* algae powder (having a moisture content of about 5%), 5% anti-microbial agents, 1.5% HPMC, and 2% vitamins.

Liquid phase: Add 6% oil emulsion ("Super-Selco^{™}", containing about 67% of oil and 33% of water) to 44.5% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 53% gel (including the water in the oil emulsion and the water soluble anti-microbial agents) and about 39% algae dry matter (about 75% on a dry matter basis). It further comprises about 8% of oil on a dry matter basis.

When introduced in the culture medium, the algal cells will slowly release from the gel and not clump together in aggregates. After 3 months in room temperature: the gel is still conserved well, no growth of fungi, bacteria or bad smells are observed.

### Example 5

Powder phase: Mix 41% spray-dried *Chlorella* algae powder (having a moisture content of about 5%) with 5% anti-microbial agents, 2% HPMC and 2% vitamins.

Liquid phase: Add 15% oil emulsion ("DHA-Selco^{™}") to 35% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 46% gel (including the water in the oil emulsion and the water soluble anti-microbial agents) and about 39% algae dry matter (about 66% on a dry matter basis). It further comprises about 18% of oil on a dry matter basis.

When introduced in the culture medium, the algal cells will slowly release from the gel and not clump together in aggregates. After 3 months in room temperature: the gel is still conserved well, no growth of fungi, bacteria or bad smells is observed.

## Claims

1. Feed for the culture of aquatic organisms, in particular filter feeding organisms, containing an amount of at least 20% by weight, preferably at least 25% by weight, dry matter of at least partially dried cells and/or cell fragments of unicellular algae and/or yeast, **characterised in that** said feed is in the form of at least one gelled body which comprises, in addition to said cells and/or cell fragments of unicellular algae and/or yeast, between 30% and 80% by weight of a water soluble or dispersible gel wherein said cells and/or cell fragments are embedded, the feed comprising optionally solid particles which have a size larger than 500 µm and which are substantially insoluble in water of 20°C, said percents by weight of cells and/or cell fragments and of said gel being determined without including the weight of said optional solid particles in the weight of the feed and said gelled body having a weight of at least 1 g, the weight of said optional solid particles not included.

2. Feed according to claim 1 **characterised in that** said gelled body comprises between 40 and 60% by weight of said gel, the weight of the gelled body not including the weight of said optional solid particles.

3. Feed according to claim 1 or 2, **characterised in that** said gelled body has a weight of at least 10 g, preferably at least 50 g, more preferably at least 100 g and most preferably at least 200 g, the weight of the gelled body not including the weight of said optional solid particles.

4. Feed according to any one of the claims 1 to 3, **characterised in that** said gelled body contains at least 20% by weight, preferably at least 25% by weight and more preferably at least 35% by weight, dry matter of at least partially dried cells and/or cell fragments of unicellular algae, the weight of said optional solid particles being not included in the weight of the gelled body.

5. Feed according to any one of the claims 1 or 4, **characterised in that** said gelled body contains at least 20% by weight, preferably at least 25% by weight and more preferably at least 35% by weight, dry matter of at least partially dried cells and/or cell fragments of yeast, the weight of said optional solid particles being not included in the weight of the gelled body.

6. Feed according to any one of the claims 1 to 5, **characterised in that** said gelled body contains more than 40%, preferably more than 50% and more preferably more than 60% of said at least partially dried cells and/or cell fragments, on a dry weight basis, the dry weight of said optional solid particles being not included in the dry weight of the gelled body.

7. Feed according to any one of the claims 1 to 6, **characterised in that** said gelled body contains at least 35% by weight dry matter of at least partially dried cells and/or cell fragments of unicellular algae and/or yeast, the weight of said optional solid particles being not included in the weight of the gelled body.

8. Feed according to any one of the claims 1 to 7, **characterised in that** said at least partially dried cells and/or cell fragments have a moisture content of less than 20% by weight, preferably of less than 15% by weight and more preferably of less than 10% by weight.

9. Feed according to any one of the claims 1 to 8, **characterised in that** said gel comprises water and between 1 and 10% by weight of at least one gelling agent, the gelling agent comprising preferably a food gum, in particular CMC and/or HPMC, and preferably HPMC.

10. Feed according to any one of the claims 1 to 9, **characterised in that** said gelled body comprises at least one particulate additive containing particles having a size smaller than 100 µm, preferably smaller than 50 µm, which particulate additive is preferably substantially homogeneously distributed in the gelled body.

11. Feed according to any one of the claims 1 to 10, **characterised in that**, in addition to said cells and/or cell fragments, said gelled body, said optional solid particles not included, contains more than 5%, preferably more than 7% lipids on a dry weight basis, the lipids being preferably emulsified in the gel.

12. Feed according to any one of the claims 1 to 11, **characterised in that** said gelled body comprises at least one anti-microbial agent, in particular an anti-microbial agent dissolved in the gel.

13. Feed according to any one of the claims 1 to 12, **characterised in that** said gelled body comprises at least one probiotic micro-organism, different from said unicellular algae, the probiotic micro-organism being present in an amount of at least 10⁷ colony forming units per gram feed, said optional solid particles not included, if the probiotic micro-organism is a living micro-organism, or in an amount of at least 10⁷ cells per gram feed, said optional solid particles not included, if the probiotic micro-organism is a dead micro-organism and/or a yeast.

14. Feed according to any one of the claims 1 to 13, **characterised in that** it comprises less than 10% by weight, preferably less than 5% by weight, of solid food particles which are larger than 500 µm, and preferably less than 10% by weight, more preferably less than 5% by weight, of solid food particles which are larger than 100 µm.

15. Feed according to any one of the claims 1 to 14, **characterised in that** said gel comprises water and at least one gelling agent, the gelling agent and the amount thereof being selected so that it takes between 1 and 6 hours for the feed to release 50% by weight of its cells and/or cell fragments when introducing a spherical piece of the feed, which measures 5 grams without any of said optional solid particles, in 500 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of feed, and has a length of 40 mm and a diameter of 8 mm.

16. Feed according to claim 15, **characterised in that** the gelling agent and the amount thereof are further select so that at least 5% by weight of the cells and/or cell fragments are released one hour after introducing a spherical piece of the feed, which measures 5 grams without any of said optional solid particles, in 500 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of feed, and has a length of 40 mm and a diameter of 8 mm.

17. Process to produce a feed according to any one of the claims 1 to 16, **characterised**
**in that** at least a gelling agent enabling to produce a water soluble or dispersible gel, water and at least partially dried cells and/or cell fragments of unicellular algae and/or yeast are mixed and the obtained mixture is formed into a gelled body of at least 1 g,
and
**in that** the at least partially dried cells and/or cell fragments, the water and the gelling agent are used in such amounts that the gelled body, not including any optional solid particles which have a size larger than 500 µm and which are substantially insoluble in water of 20°C, comprises at least 20% by weight, preferably at least 25% by weight, dry matter of said at least partially dried cells and/or cell fragments and between 30% and 80% by weight of the water soluble or dispersible gel.

18. Process according to claim 17, **characterised in that** the at least partially dried cells and/or cell fragments used to produce said mixture have a moisture content of less than 20% by weight, preferably of less than 15% by weight and more preferably of less than 10% by weight.

19. Method to culture aquatic organisms, in particular marine filter feeding organisms such as rotifers and/or *Artemia,* **characterised in that** the marine filter feeding organisms are cultured in a culture medium wherein the feed according to anyone of the claims 1 to 16 is introduced to feed said organisms.

20. Method according to claim 19, **characterised in that** said gelled body of said feed comprises at least one anti-microbial agent in such an amount as to negatively affect growth of harmful micro-organisms in said culture medium.

## Patentansprüche

1. Futtermittel für die Züchtung von Wasserlebewesen, insbesondere Lebewesen, die sich durch das Ausfiltern von Kleinlebewesen ernähren, das eine Menge von zumindest 20 Gew.%, vorzugsweise zumindest 25 Gew.%, Trockenmasse von zumindest teilweise getrockneten Zellen und/oder Zellfragmenten einzelliger Algen und/oder Hefen enthält, **dadurch gekennzeichnet, dass** das erwähnte Futtermittel in Form von zumindest einem Gelkörper vorliegt, welcher zusätzlich zu den erwähnten Zellen und/oder Zellfragmenten einzelliger Algen und/oder Hefen zwischen 30 Gew.% und 80 Gew.% eines wasserlöslichen oder -dispergierbaren Gels enthält, in dem die erwähnten Zellen und/oder Zellfragmente eingeschlossen sind, wobei das Futtermittel optional feste Partikel umfasst, die eine Größe von mehr als 500 µm haben und in Wasser von 20°C substanziell unlöslich sind, wobei die erwähnten Gewichtsprozentsätze von Zellen und/oder Zellfragmenten und des erwähnten Gels bestimmt werden, ohne das Gewicht der erwähnten optionalen festen Partikel ins Gewicht des Futtermittels mit einzuschließen und wobei der erwähnte Gelkörper ein Gewicht von zumindest 1 g hat, ausgenommen das Gewicht der erwähnten optionalen festen Partikel.

2. Futtermittel nach Anspruch 1, **dadurch gekennzeichnet, dass** der erwähnte Gelkörper zwischen 40 und 60 Gew.% des erwähnten Gels umfasst, wobei das Gewicht des Gelkörpers das Gewicht der erwähnten optionalen festen Partikel nicht mit einschließt.

3. Futtermittel nach Anspruch 1 oder 2, **dadurch gekennzeichnet, dass** der erwähnte Gelkörper ein Gewicht von zumindest 10 g hat, vorzugsweise zumindest 50 g, noch besser zumindest 100 g und am besten zumindest 200 g hat, wobei das Gewicht des Gelkörpers das Gewicht der erwähnten optionalen festen Partikel nicht mit einschließt.

4. Futtermittel nach jedem der Ansprüche 1 bis 3, **dadurch gekennzeichnet, dass** der erwähnte Gelkörper zumindest 20 Gew.%, vorzugsweise zumindest 25 Gew.% und noch besser zumindest 35 Gew.%, Trockenmasse von zumindest teilweise getrockneten Zellen und/oder Zellfragmenten von einzelligen Algen enthält, wobei das Gewicht der erwähnten optionalen festen Partikel nicht im Gewicht des Gelkörpers mit eingeschlossen ist.

5. Futtermittel nach jedem der Ansprüche 1 oder 4, **dadurch gekennzeichnet, dass** der erwähnte Gelkörper zumindest 20 Gew.%, vorzugsweise zumindest 25 Gew.% und noch besser zumindest 35 Gew.%, Trockenmasse von zumindest teilweise getrockneten Zellen und/oder Zellfragmenten von Hefe enthält, wobei das Gewicht der erwähnten optionalen festen Partikel nicht im Gewicht des Gelkörpers mit eingeschlossen ist.

6. Futtermittel nach jedem der Ansprüche 1 bis 5, **dadurch gekennzeichnet, dass** der erwähnte Gelkörper mehr als 40 %, vorzugsweise mehr als 50 % und noch besser mehr als 60 % der erwähnten zumindest teilweise getrockneten Zellen und/oder Zellfragmente, auf Basis des Trockengewichts, enthält, wobei das Trockengewicht der erwähnten optionalen festen Partikel nicht im Trockengewicht des Gelkörpers mit eingeschlossen ist.

7. Futtermittel nach jedem der Ansprüche 1 bis 6, **dadurch gekennzeichnet, dass** der erwähnte Gelkörper zumindest 35 Gew.% Trockenmasse von zumindest teilweise getrockneten Zellen und/oder Zellfragmenten von einzelligen Algen und/oder Hefe enthält, wobei das Gewicht der erwähnten optionalen festen Partikel nicht im Gewicht des Gelkörpers mit eingeschlossen ist.

8. Futtermittel nach jedem der Ansprüche 1 bis 7, **dadurch gekennzeichnet, dass** die erwähnten zumindest teilweise getrockneten Zellen und/oder Zellfragmente einen Feuchtigkeitsgehalt von weniger als 20 Gew.%, vorzugsweise von weniger als 15 Gew.% und noch besser von weniger als 10 Gew.% haben.

9. Futtermittel nach jedem der Ansprüche 1 bis 8, **dadurch gekennzeichnet, dass** das erwähnte Gel Wasser und zwischen 1 und 10 Gew.% von zumindest einem Geliermittel enthält, wobei das Geliermittel vorzugsweise ein lebensmitteltaugliches Gummi, insbesondere CMC und/oder HPMC, und vorzugsweise HPMC umfasst.

10. Futtermittel nach jedem der Ansprüche 1 bis 9, **dadurch gekennzeichnet, dass** der erwähnte Gelkörper zumindest einen partikelförmigen Zusatzstoff umfasst, welcher Partikel mit einer Größe von weniger als 100 µm, vorzugsweise weniger als 50 µm, enthält, wobei der partikelförmige Zusatzstoff vorzugsweise substanziell homogen im Gelkörper verteilt ist.

11. Futtermittel nach jedem der Ansprüche 1 bis 10, **dadurch gekennzeichnet, dass** der erwähnte Gelkörper, ausgenommen die optionalen festen Partikel, zusätzlich zu den erwähnten Zellen und/oder Zellfragmenten, mehr als 5 %, vorzugsweise mehr als 7 % Lipide auf Basis des Trockengewichts enthält, wobei die Lipide vorzugsweise im Gel emulgiert sind.

12. Futtermittel nach jedem der Ansprüche 1 bis 11, **dadurch gekennzeichnet, dass** der erwähnte Gelkörper zumindest ein antimikrobielles Mittel enthält, insbesondere ein im Gel gelöstes antimikrobielles Mittel.

13. Futtermittel nach jedem der Ansprüche 1 bis 12, **dadurch gekennzeichnet, dass** der erwähnte Gelkörper zumindest einen probiotischen Mikroorganismus enthält, der sich von den erwähnten einzelligen Algen unterscheidet, wobei der probiotische Mikroorganismus in einer Menge von zumindest 10⁷ Kolonie bildenden Einheiten pro Gramm Futtermittel, ausgenommen die erwähnten optionalen festen Partikel, anwesend ist, wenn der probiotische Mikroorganismus ein lebender Mikroorganismus ist, oder in einer Menge von zumindest 10⁷ Zellen pro Gramm Futtermittel, ausgenommen die erwähnten optionalen festen Partikel, wenn der probiotische Mikroorganismus ein toter Mikroorganismus und/oder eine Hefe ist.

14. Futtermittel nach jedem der Ansprüche 1 bis 13, **dadurch gekennzeichnet, dass** es weniger als 10 Gew.%, vorzugsweise weniger als 5 Gew.%, fester Nahrungspartikel umfasst, welche größer als 500 µm sind, und vorzugsweise weniger als 10 Gew.%, noch besser weniger als 5 Gew.%, fester Nahrungspartikel umfasst, welche größer als 100 µm sind.

15. Futtermittel nach jedem der Ansprüche 1 bis 14, **dadurch gekennzeichnet, dass** das erwähnte Gel Wasser und zumindest ein Geliermittel umfasst, wobei das Geliermittel und dessen Menge so ausgewählt werden, dass es zwischen 1 und 6 Stunden dauert, bis das Futtermittel 50 Gew.% seiner Zellen und/oder Zellfragmente freigegeben hat, wenn ein kugelförmiges Stück des Futtermittels, welches ohne jeglichen der erwähnten optionalen festen Partikel 5 Gramm wiegt, in 500 ml destilliertes Wasser von 20°C gelegt wird, das sich in einem zylindrischen Becher mit flachem Boden und einem Innendurchmesser von 85 mm befindet und das mit einem zylindrischen Magnetstab, der auf dem Boden des Bechers, unter dem Stück Futtermittel, rotiert und eine Länge von 40 mm und einen Durchmesser von 8 mm hat, konstant mit 120 U/min umgerührt wird.

16. Futtermittel nach Anspruch 15, **dadurch gekennzeichnet, dass** das Geliermittel und dessen Menge ferner so ausgewählt werden, dass zumindest 5 Gew.% der Zellen und/oder Zellfragmente eine Stunde, nachdem ein kugelförmiges Stück des Futtermittels, welches ohne jeglichen der erwähnten optionalen festen Partikel 5 Gramm wiegt, in 500 ml destilliertes Wasser von 20°C eingelegt wurde, das sich in einem zylindrischen Becher mit flachem Boden und einem Innendurchmesser von 85 mm befindet und das mit einem zylindrischen Magnetstab, der auf dem Boden des Bechers, unter dem Stück Futtermittel, rotiert und eine Länge von 40 mm und einen Durchmesser von 8 mm hat, konstant mit 120 U/min umgerührt wird, freigegeben sind.

17. Prozess zur Herstellung eines Futtermittels nach jedem der Ansprüche 1 bis 16, **dadurch gekennzeichnet,**
**dass** zumindest ein Geliermittel, das die Herstellung eines wasserlöslichen oder -dispergierbaren Gels ermöglicht, Wasser und zumindest teilweise getrocknete Zellen und/oder Zellfragmente von einzelligen Algen und/oder Hefe gemischt werden und die erhaltene Mischung zu einem Gelkörper von zumindest 1 g geformt wird,
und **dadurch**,
**dass** die zumindest teilweise getrockneten Zellen und/oder Zellfragmente, das Wasser und das Geliermittel in solchen Mengen verwendet werden, dass der Gelkörper, ausgenommen jeglichen der festen Partikel, die eine Größe von mehr als 500 µm haben und in Wasser von 20°C substanziell unlöslich sind, zumindest 20 Gew.%, vorzugsweise 25 Gew.%, Trockenmasse der erwähnten zumindest teilweise getrockneten Zellen und/oder Zellfragmente und zwischen 30 Gew.% und 80 Gew.% des wasserlöslichen oder -dispergierbaren Gels umfasst.

18. Prozess nach Anspruch 17, **dadurch gekennzeichnet, dass** die erwähnten zumindest teilweise getrockneten Zellen und/oder Zellfragmente, die zur Herstellung der erwähnten Mischung verwendet werden, einen Feuchtigkeitsgehalt von weniger als 20 Gew.%, vorzugsweise von weniger als 15 Gew.% und noch besser von weniger als 10 Gew.% haben.

19. Verfahren zur Züchtung von Wasserlebewesen, insbesondere Meereslebewesen, die sich durch das Ausfiltern von Kleinlebewesen ernähren, wie Rotifera und/oder *Artemia,* **dadurch gekennzeichnet, dass** die Meereslebewesen, die sich durch das Ausfiltern von Kleinlebewesen ernähren, in einem Nährmedium gezüchtet werden, in das das Futtermittel nach jedem der Ansprüche 1 bis 16 eingebracht wird, um die erwähnten Lebewesen zu ernähren.

20. Verfahren nach Anspruch 19, **dadurch gekennzeichnet, dass** der erwähnte Gelkörper des erwähnten Futtermittels zumindest ein antimikrobielles Mittel in einer solchen Menge umfasst, dass es das Wachstum schädlicher Mikroorganismen im erwähnten Nährmedium negativ beeinflusst.

## Revendications

1. Composition alimentaire pour la culture d'organismes aquatiques, en particulier d'organismes alimentaires filtrants, contenant une quantité d'au moins 20 % en poids, de préférence d'au moins 25 % en poids, de matière sèche de cellules et / ou fragments cellulaires au moins en partie séchés d'algues et / ou de levures unicellulaires, **caractérisée en ce que** ladite composition alimentaire se présente sous la forme d'au moins un corps gélifié qui comprend, en plus desdites cellules et / ou desdits fragments cellulaires d'algues et / ou de levures unicellulaires, entre 30 % et 80 % en poids d'un gel soluble ou dispersible dans l'eau dans lequel lesdites cellules et / ou lesdits fragments cellulaires sont incorporés, la composition alimentaire comprenant facultativement des particules solides qui ont une taille supérieure à 500 µm et qui sont essentiellement insolubles dans de l'eau à 20°, lesdits pourcentages en poids de cellules et / ou fragments cellulaires et dudit gel étant déterminés sans comprendre le poids desdites particules solides facultatives dans le poids de la composition alimentaire et ledit corps gélifié ayant un poids d'au moins 1 g, le poids desdites particules solides facultatives non compris.

2. Composition alimentaire selon la revendication 1, **caractérisée en ce que** ledit corps gélifié comprend entre 40 et 60 % en poids dudit gel, le poids du corps gélifié ne comprenant pas le poids desdites particules solides facultatives.

3. Composition alimentaire selon la revendication 1 ou 2, **caractérisée en ce que** ledit corps gélifié a un poids d'au moins 10 g, de préférence d'au moins 50 g, plus préférablement d'au moins 100 g et le plus préférablement d'au moins 200 g, le poids du corps gélifié ne comprenant pas le poids desdites particules solides facultatives.

4. Composition alimentaire selon l'une quelconque des revendications 1 à 3, **caractérisée en ce que** ledit corps gélifié contient au moins 20 % en poids, de préférence au moins 25 % en poids et plus préférablement au moins 35 % en poids, de matière sèche de cellules et / ou fragments cellulaires au moins en partie séchés d'algues unicellulaires, le poids desdites particules solides facultatives n'étant pas compris dans le poids du corps gélifié.

5. Composition alimentaire selon l'une quelconque des revendications 1 ou 4, **caractérisée en ce que** ledit corps gélifié contient au moins 20 % en poids, de préférence au moins 25 % en poids et plus préférablement au moins 35 % en poids, de matière sèche de cellules et/ou fragments cellulaires au moins en partie séchés de levures, le poids desdites particules solides facultatives n'étant pas compris dans le poids du corps gélifié.

6. Composition alimentaire selon l'une quelconque des revendications 1 à 5, **caractérisée en ce que** ledit corps gélifié contient plus de 40 %, de préférence plus de 50 % et plus préférablement plus de 60 % desdites cellules et / ou desdits fragments cellulaires au moins en partie séchés, sur une base de matière sèche, le poids à sec desdites particules solides facultatives n'étant pas compris dans le poids à sec du corps gélifié.

7. Composition alimentaire selon l'une quelconque des revendications 1 à 6, **caractérisée en ce que** ledit corps gélifié contient au moins 35 % en poids de matière sèche de cellules et / ou fragments cellulaires au moins en partie séchés d'algues unicellulaires et / ou de levures, le poids desdites particules solides facultatives n'étant pas compris dans le poids du corps gélifié.

8. Composition alimentaire selon l'une quelconque des revendications 1 à 7, **caractérisée en ce que** lesdites cellules et / ou lesdits fragments cellulaires au moins en partie séchés ont une teneur en humidité de moins de 20 % en poids, de préférence de moins de 15 % en poids et plus préférablement de moins de 10 % en poids.

9. Composition alimentaire selon l'une quelconque des revendications 1 à 8, **caractérisée en ce que** ledit gel comprend de l'eau et entre 1 et 10 % en poids d'au moins un agent gélifiant, l'agent gélifiant comprenant de préférence une gomme alimentaire, en particulier du CMC et / ou du HPMC, et de préférence du HPMC.

10. Composition alimentaire selon l'une quelconque des revendications 1 à 9, **caractérisée en ce que** ledit corps gélifié comprend au moins un additif particulaire contenant des particules ayant une taille inférieure à 100 µm, de préférence inférieure à 50 µm, lequel additif particulaire est de préférence distribué de manière essentiellement homogène dans le corps gélifié.

11. Composition alimentaire selon l'une quelconque des revendications 1 à 10, **caractérisée en ce que**, en plus desdites cellules et / ou desdits fragments cellulaires, ledit corps gélifié, lesdites particules solides facultatives non comprises, contient plus de 5 %, de préférence plus de 7 % de lipides sur une base de matière sèche, les lipides étant de préférence émulsifiés dans le gel.

12. Composition alimentaire selon l'une quelconque des revendications 1 à 11, **caractérisée en ce que** ledit corps gélifié comprend au moins un agent antimicrobien, en particulier un agent antimicrobien dissous dans le gel.

13. Composition alimentaire selon l'une quelconque des revendications 1 à 12, **caractérisée en ce que** ledit corps gélifié comprend au moins un micro-organisme probiotique différent desdites algues unicellulaires, le micro-organisme probiotique étant présent dans une quantité d'au moins 10⁷ unités formant colonies par gramme de composition alimentaire, lesdites particules solides facultatives non comprises, si le micro-organisme probiotique est un micro-organisme vivant, ou dans une quantité d'au moins 10⁷ cellules par gramme de composition alimentaire, lesdites particules solides facultatives non comprises, si le micro-organisme probiotique est un micro-organisme mort et / ou une levure.

14. Composition alimentaire selon l'une quelconque des revendications 1 à 13, **caractérisée en ce qu'**elle comprend moins de 10 % en poids, de préférence moins de 5 % en poids, de particules alimentaires solides qui sont supérieures à 500 µm, et de préférence moins de 10 % en poids, plus préférablement moins de 5 % en poids, de particules alimentaires solides qui sont supérieures à 100 µm.

15. Composition alimentaire selon l'une quelconque des revendications 1 à 14, **caractérisée en ce que** ledit gel comprend de l'eau et au moins un agent gélifiant, l'agent gélifiant et la quantité de celui-ci étant choisis de telle manière qu'il faille entre 1 et 6 heures pour que la composition alimentaire libère 50 % en poids de ses cellules et / ou fragments cellulaires quand on introduit un morceau sphérique de la composition alimentaire, qui mesure 5 grammes sans aucune desdites particules solides facultatives, dans 500 ml d'eau distillée à 20° C qui est contenue dans un bécher cylindrique à fond plat ayant un diamètre intérieur de 85 mm et qui est continuellement agité à 120 tours / minute avec une tige magnétique cylindrique qui tourne sur le fond du bécher, en dessous du morceau de composition alimentaire, et a une longueur de 40 mm et un diamètre de 8 mm.

16. Composition alimentaire selon la revendication 15, **caractérisée en ce que** l'agent gélifiant et la quantité de celui-ci sont en outre choisis de telle manière qu'au moins 5 % en poids des cellules et / ou fragments cellulaires soient libérés une heure après avoir introduit un morceau sphérique de la composition alimentaire, qui mesure 5 grammes sans aucune desdites particules solides facultatives, dans 500 ml d'eau distillée à 20° C qui est contenue dans un bécher cylindrique à fond plat ayant un diamètre intérieur de 85 mm et qui est continuellement agité à 120 tours / minute avec une tige magnétique cylindrique qui tourne sur le fond du bécher, en dessous du morceau de composition alimentaire, et a une longueur de 40 mm et un diamètre de 8 mm.

17. Procédé pour produire une composition alimentaire selon l'une quelconque des revendications 1 à 16, **caractérisé**
**en ce qu'**au moins un agent gélifiant capable de produire un gel soluble ou dispersible dans l'eau, de l'eau et des cellules et / ou fragments cellulaires au moins en partie séchés d'algues et / ou de levures unicellulaires sont mélangés et le mélange obtenu est formé en un corps gélifié d'au moins 1 g,
et
**en ce que** les cellules et / ou fragments cellulaires au moins en partie séchés, l'eau et l'agent gélifiant sont utilisés dans des quantités telles que le corps gélifié, ne comprenant pas de particules solides facultatives qui ont une taille supérieure à 500 µm et qui sont essentiellement insolubles dans de l'eau à 20° C, comprend au moins 20 % en poids, de préférence au moins 25 % en poids, de matière sèche desdites cellules et / ou desdits fragments cellulaires au moins en partie séchés et entre 30 % et 80 % en poids du gel soluble ou dispersible dans l'eau.

18. Procédé selon la revendication 17, **caractérisé en ce que** les cellules et / ou fragments cellulaires au moins en partie séchés utilisés pour produire ledit mélange ont une teneur en humidité de moins de 20 % en poids, de préférence de moins de 15 % en poids et plus préférablement de moins de 10 % en poids.

19. Procédé pour cultiver des organismes aquatiques, en particulier des organismes alimentaires filtrants marins tels que des rotifères et / ou des *Artemia,* **caractérisé en ce que** les organismes alimentaires filtrants marins sont cultivés dans un milieu de culture dans lequel la composition alimentaire selon l'une quelconque des revendications 1 à 16 est introduite pour nourrir lesdits organismes.

20. Procédé selon la revendication 19, **caractérisé en ce que** ledit corps gélifié de ladite composition alimentaire comprend au moins un agent antimicrobien dans une quantité suffisante pour affecter négativement la croissance de micro-organismes nocifs dans ledit milieu de culture.
